(19) Europäisches Patentamt
European Patent Office
Office européen des brevets

(11) Veröffentlichungsnummer: **0 254 007**
**B1**

(12) # EUROPÄISCHE PATENTSCHRIFT

(45) Veröffentlichungstag der Patentschrift: **28.02.90**

(51) Int. Cl.⁴: **B01J 13/02**

(21) Anmeldenummer: **87108277.2**

(22) Anmeldetag: **09.06.87**

(54) **Mikroverkapselung von lipophilen Massen nach dem Grenzflächenpolyadditionsverfahren.**

(30) Priorität: **18.06.86 DE 3620347**

(43) Veröffentlichungstag der Anmeldung: **27.01.88 Patentblatt 88/4**

(45) Bekanntmachung des Hinweises auf die Patenterteilung: **28.02.90 Patentblatt 90/9**

(84) Benannte Vertragsstaaten: **CH DE FR GB IT LI**

(56) Entgegenhaltungen:
**AU-B- 547 600**
**DE-A- 2 557 407**
**FR-A- 2 083 120**
**FR-A- 2 348 825**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk(DE)**

(72) Erfinder: **Richartz, Adolf, Dr., Georgstrasse 41, D-5000 Köln 90(DE)**
Erfinder: **Dahm, Manfred, Dr., Am Falkenberg 29, D-5090 Leverkusen(DE)**

**EP 0 254 007 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Verfahren zur Herstellung von Mikrokapseln durch Grenzflächenpolyaddition zwischen Polyisocyanaten und Polyaminen sind bekannt und beispielsweise beschrieben in den deutschen Offenlegungsschriften 2 109 335; 2 251 381; 2 242 910; 2 120 921, 2 311 712, 2 523 586 und 2 655 048.

Ein Verfahren zur Herstellung von wachshaltigen/ölhaltigen Mirkokapseln mit polymeren Kapselwänden ist in der deutschen Patentschrift 1 096 038 beschrieben.

Bei diesem Verfahren wird die Lösung eines polymerisierbaren Monomeren in einem Öl, in dem das Polymerisat unlöslich ist, in einer polaren Flüssigkeit dispergiert und das Monomere in den gebildeten ölhaltigen Tröpfchen in Gegenwart eines Katalysators polymerisiert.

In der japanischen Patentschrift 69 448-69 und der deutschen Patentschrift 2 043 556 ist ebenfalls ein Verfahren beschrieben, bei dem polymerisierbare Ausgangsverbindungen nebst einem Katalysator und einem Lösungsmittel im einzukapselnden Öl vorgelegt, in einer polaren Flüssigkeit emulgiert und anschließend unter Erwärmen der Emulsion im Nachhinein die Verdunstung des Lösungsmittels und die Polyaddition/Polymerisation der Reaktionskomponenten allein aus der dispersen Phase heraus erfolgt.

Den aufgeführten Verfahren haften alle Nachteile an, die sich immer dann einstellen, wenn aus <u>einer</u> Phase, der dispersen Phase, das heißt, aus dem Tröpfcheninneren heraus verkapselt wird. Der Wandaufbau erfolgt nicht unbedingt dort, wo er erwünscht ist, nämlich an der Phasengrenzfläche. Die Ausbildung des Polymeren erfolgt vielmehr auch innerhalb der dispersen Phase. Daher enthalten die resultierenden Kapseln in ihrem Inneren auch das dort nicht erwünschte Polymer und außerdem gegebenenfalls Lösungsmittel und Katalysator. Weiterhin ist die Kapselwand ungleichmäßig und nur ungenügend ausgebildet, was sich wiederum in Form von Undichtigkeit und einer nur geringen Wandfestigkeit auswirkt.

Ziel der vorliegenden Erfindung war es daher, ein Verfahren zur Herstellung von lipophilen Massen enthaltenden Mikrokapseln anzugeben, die in ihrem Inneren weder polymeres Wandmaterial noch Lösungsmittel noch Katalysator enthalten und die sich weiterhin durch gleichmäßigen Kapselwandaufbau auszeichnen. Ein weiteres Ziel der Erfindung ist es, ein Verfahren zur Herstellung von lipophilen Massen enthaltenden Kapseln mit gutem Dichtigkeits- und Festigkeitseigenschaften anzugeben.

Lipophile Massen im Sinne der Erfindung sind Fette, Öle und Wachse oder Mischungen daraus, wobei Bienenwachs, Carnaubawachs, Rizinusöl, Walfett, Schellack und Paraffin bevorzugt sind. Bevorzugt sind Cholesterylester von $C_2$-$C_{15}$-Carbonsäuren oder Mischungen verschiedener Cholsterylester, die thermochrome Eigenschaften in einem substanztypischen Temperaturbereich zeigen. Besonders bevorzugt ist Cholesterylnonanoat ($C_9$).

Es wurde nun gefunden, daß lipophile Massen enthaltende Mikrokapseln mit gleichmäßigem Wandaufbau und ohne polymeres Wandmaterial, Lösungsmittel und Katalysator in ihrem Inneren, mit guten Dichtigkeits- und Festigkeitseigenschaften dann erhalten werden, wenn die organische Phase, bestehend aus der lipophilen Masse, einer die Kapselwand aufbauenden Reaktionskomponente und einem niedrig siedenden Hilfslösungsmittel in Form feiner Tröpfchen in einer polaren Flüssigkeit emulgiert wird, diese Emulsion (A) zu einer weiteren polaren Flüssigkeit (B) gegeben wird, die die andere, die Kapselwand aufbauende Reaktionskomponente enthält und eine Temperatur aufweist, die höher ist als der Siedepunkt des Hilfslösungsmittel in der dispersen Phase (A), so daß bei der Zugabe von (A) zu (B) eine spontane Verdunstung des Hilfslösungsmittels und die zur Verkapselung führende Polyaddition erfolgt. Der Durchmesser der resultierenden Mikrokapseln beträgt 4-50 µm, vorzugsweise 5-10 µm ($d_{50}$-Wert), der Wandanteil beträgt 12-25 Gew.-%, vorzugsweise 15-20 Gew.-%.

Bevorzugte in (A) enthaltende kapselwandbildende Komponenten im Sinne der Erfindung sind aliphatische, cycloaliphatische, araliphatische, aromatische und heterocyclische Polyisocyanate, wie sie z.B. von W. Siefken in Justus Liebigs Annalen der Chemie, 562, Seiten 75-136, beschrieben werden, beispielsweise Ethylen-Diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat, sowie beliebige Gemische dieser Isomeren, 1-Isocyanato-3,3,5-trimethyl-5-isocyanatomethyl-cyclohexan (DAS 1 202 785, US-Patentschrift 3 401 190), 2,4- und 2,6-Hexa-hydrotoluylendiisocyanat, sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat, sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, m- und p-Isocyanatophenyl-sulfonylisocyanate gemäß der US-Patentschrift 3 454 606, perchlorierte Arylpolyisocyanate, wie sie z.B. in der deutschen Auslegeschrift 1 157 601 (US-Patentschrift 3 277 138) beschrieben werden, Carbodiimidgruppen aufweisende Polyisocyanate, wie sie in der deutschen Patentschrift 1 092 007 (US-Patentschrift 3 152 162) beschrieben werden, Diisocyanate, wie sie in der US-Patentschrift 3 492 330 beschrieben werden, Allophanatgruppen aufweisende Polyisocyanate, wie sie z.B. in der britischen Patentschrift 761 626 und der veröffentlichten holländischen Patentanmeldung 7 102 524 beschrieben werden. Isocyanuratgruppen aufweisende Polyisocyanate, wie sie z.B. in der US-Patentschrift 3 001 973, in den deutschen Patentschriften 1 022 789, 1 222 067 und 1 027 394, sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der US-Patentschrift 3 394 164 beschrieben werden, acylierte Harnstoffengruppen aufweisende Polyisocyanate gemäß der deutschen Patentschrift 1 230 778, Biuretgruppen aufweisende Polyisocyanate, wie sie z.B. in der deutschen Patentschrift 1 101 394 (US-Patentschriften 3 124 605 und 3 201 372) sowie in der britischen Patentschrift 889 050 beschrieben werden, durch Telomerisationsreaktionen hergestellte Polyisocyanate, wie sie z.B. in der US-Patentschrift 3 654 106, beschrieben werden, Ethergruppen aufweisende Polyisocyanate, wie sie z.B. in den britischen Patentschriften 965 474 und 1 072 956, in der US-Patentschrift 3 567 763 und in der deutschen Patentschrift 1 231 688 genannt werden, Umsetzungsprodukte der oben genannten Isocyanate mit Acetalen gemäß der deutschen Patentschrift 1 072 385, polymere Fettsäurereste enthaltende Polyisocyanate gemäß der US-Patentschrift 3 455 883.

Es ist auch möglich, die bei der technischen Isocyanatherherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Geeignete modifizierte, aliphatische Isocyanate sind solche auf Basis von Hexamethylen-1,6-diisocyanat, m-Xylylendiisocyanat, 4,4'-Diisocyanatdicyclohexylmethan bzw. Isophorondiisocyanat, die pro Molekül mindestens zwei funktionelle Isocyanatgruppen aufweisen.

Ferner geeignet sind Polyisocyanate auf Basis von Derivaten des Hexamethylen-1,6-diisocyanats mit Biuretstruktur gemäß DE-AS 1 101 394, DE-AS 1 543 178, DE-OS 1 568 017, DE-OS 1 931 055.

Außerdem einsetzbar sind Polyisocyanato-polyuretonimine, wie sie durch Carbodiimidisierung von Biuretgruppen enthaltendem Hexamethylen-1,6-diisocyanat mit phosphororganischen Katalysatoren entstehen, durch weitere Umsetzung primär gebildeter Carbodiimidgruppen mit Isocyanatgruppen zu Uretonimingruppen.

Es können auch Isocyanurat-modifizierte Polyisocyanate mit mehr als zwei endständigen Isocyanatgruppen verwendet werden. Speziell ist in der DE-OS 2 839 133 die Herstellung Isocyanurat-modifizierter Polyisocyanate auf Basis von Hexamethylendiisocyanat beschrieben. Die übrigen können analog erhalten werden.

Geeignet sind ferner die Isocyanate der Formel (I)

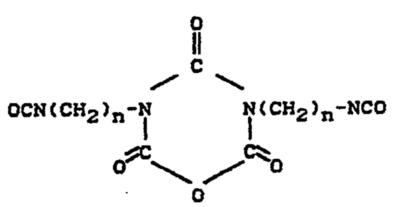

(I)

n = 3-6

Es können auch Gemische aus den genannten modifizierten aliphatischen und den genannten aromatischen Isocyanaten insbesondere Diphenylmethandiisocyanaten, die gegebenenfalls modifiziert sein können, verwendet werden.

Bevorzugte Isocyanate in (A) sind biuretisches Hexamethylendiisocyanat in Abmischung mit 4,4'-Diphenylmethanisocyanat, gegebenenfalls mit 2,4-Anteil, trimerisiertes Hexamethylendiisocyanat in Abmischung mit 4,4'-Diphenylmethandiisocyanat, gegenbenenfalls mit 2,4-Anteil und/oder Isocyanate der Formel (I) (Oxadiazintrion des HDI).

Als ebenfalls in (A) vorhandene, niedrig siedende Hilfslösungsmittelkomponente werden organische Lösungsmittel mit Siedepunkten zwischen 20°C und 80°C verwendet, bevorzugt n-Pentan, Chloroform, Petrolether, Dichlormethan, Leichtbenzin, 2-Methylpentan, 3-Methylpentan, Methylbutan, 1,1-Dichlorethan oder Mischungen daraus.

Bevorzugte, zur Grenzflächenreaktion mit den Isocyanaten geeignete, auch als "Vernetzer" fungierende Amine sind aliphatische, primäre oder sekundäre Di- und Polyamine, z.B.: Ethylendiamin-(1,2), Bis(3-aminopropyl)amin, Hydrazinethanol-(2), Bis(2-methylaminoethyl)methylamin, 1,4-Diaminocyclohexan, 3-Amino-1-methyl-aminopropan, N-Hydroxy-ethyl-ethylendiamin, N-Methyl-bis(3-aminopropyl)amin, 1,4-Diamino-n-butan, 1,6-Diamino-n-hexan, Ethylen-(1,2)-diamin-N-ethyl-sulfonsäure (als Alkalisalz), 1-Aminoethylendiamin-(1,2), Bis(N,N'-aminoethyl)ethylendiamin-(1,2).

Hydrazin und seine Salze werden im vorliegenden Zusammenhang ebenfalls wie Amin angesprochen. Bevorzugte Amine (Vernetzer) im Sinne der Erfindung sind Diethylentriamin, Hexamethylendiamin, Hydrazinhydrat, 4,4'-Diphenylmethandiamin, Triethanolamin und/oder Mischungen daraus.

Als Dispergator/Emulgator kann beispielsweise teilverseiftes Polyvinylacetat verwendet werden.

Im allgemeinen kann das Verfahren durchgeführt werden, indem man unter Bildung der Emulsion (A) die zu verkapselnde(n) Masse(n) und eine erste kapselwandbildende Reaktionskomponente in einem niedrig siedenden organischen Hilfslösungsmittel löst und diese Lösung in einer damit nicht mischbaren polaren Flüssigkeit, gegebenenfalls unter Zuhilfenahme eines Dispergators/Emulgators wie z.B. teilverseiften Polyvinylacetats unter kräftigem Rühren emulgiert. Die Temperatur dieser Emulsion beträgt bevorzugt 20° bis 30°C.

Die Komponente (B) wird durch Erwärmung einer zweiten kapselwandbildenden Reaktionskomponente erhalten, gegebenenfalls in Form einer Lösung in einer polaren Flüssigkeit, die gegebenenfalls teilverseiftes Polyvinylacetat enthält, auf eine Temperatur, die mindestens 5°C oberhalb des Siedepunktes des in (A) enthaltenden organischen Hilfslösungsmittel liegt. Als erste kapselwandbildende Reaktionskomponente wird bevorzugt das Isocyanat, als zweite kapselwandbildende Reaktionskomponente wird bevorzugt das Amin eingesetzt. Die polare Flüssigkeit ist vorzugsweise Wasser.

Unter starkem Rühren gibt man nun Emulsion (A) zur Komponente (B) wobei das organische Hilfslösungsmittel sich verflüchtigt und die Kapselwandbildung einsetzt.

Das Hilfslösungsmittel kann auch unter reduzierten Druck entfernt werden. Die gebilde ten Mikrokapseln können durch Sprühtrocknung oder durch Aufnehmen in Isopropylalkohol und anschließendes vorsichtiges Abdampfen der überschüssigen Flüssigkeit im Vakuum aus den wäßrigen Dispersionen als trockene Kapseln isoliert werden.

Beispiel 1

6,4 g einer Mischung von biuretisiertem Hexamethylendiisocyanat und reinem Diphenylmethandiisocyanat mit 60 Gew.-% 2,4- und 40 Gew.-%, 4,4'-Anteil (im Gewichtsverhältnis 9:1) werden nebst 26,7 g Cholesterylesternonanoat in 57,3 g Dichlormethan gelöst. Diese Lösung wird in 300 g 0,5 gew.-%iger wäßriger, teilverseifter Polyvinylacetat-Lösung 30 Sekunden lang intensiv mit dem Ultra-Turax emguliert.

Die so hergestellte wäßrige Emulsion mit einer Temperatur von 20°C wird dann zu 300 g 0,5 gew.-%iger wäßriger, teilverseifter Polyvinylacetatlösung gegeben, die eine Temperatur von 55°C aufweist. Diese wäßrige Polyvinylacetat-Lösung enthält gleichzeitig 2,6 g Diethylentriamin.

Nach beendeter Zugabe wird 2 Stunden bei 55°C auspolymerisiert.

Die Zugabegeschwindigkeit ist so zu gestalten, daß die Temperatur der Reaktionsmischung oberhalb 45°C bleibt.

Durch Sprühtrocknung oder durch Aufnehmen in Isopropylalkohol und anschließendes vorsichtiges Abdampfen der überschüssigen Flüssigkeit unter vermindertem Druck lassen sich aus den wäßrigen Dispersionen die trockenen Kapseln isolieren. Der Kapseldurchmesser beträgt 8 µm ($d_{50}$-Wert), der relative Wandanteil beträgt aufgrund des Verhältnisses der eingesetzten Mengen an Monomeren und zu verkapselndem Material 15 %.

Beispiel 2

Als Isocyanatkomponente werden 7,7 g des Isocyanates der Formel (I) eingesetzt; als Amin-Komponente 1,3 g Diethylentriamin. Die praktische Vorgehensweise entspricht ansonsten Beispiel 1.

$d_{50}$ der isolierten Mikrokapseln:7,5
Realtiver Wandanteil:14,8

Beispiel 3

Als Isocyanat-Komponente werden 6,9 g Hexamethylendiisocyanat eingesetzt; als Amin-Komponente 2,1 g Hydrazinhydrat. Die praktische Vorgehensweise entspricht ansonsten Beispiel 1.

$d_{50}$ der isolierten Mikrokapseln:7
Realtiver Wandanteil:15,0

## Patentansprüche

1. Verfahren zur Herstellung lipophiler Massen enthaltender Mikrokapseln nach einem Grenzflächen-Polyadditionsverfahren, dadurch gekennzeichnet, daß man lipophile Massen und eine erste kapselwandbildende Reaktionskomponente in einem Hilfslösungsmittel löst, diese Lösung in einer damit nicht mischbaren polaren Flüssigkeit gegebenenfalls in Anwesenheit eines Emulgators/Dispergators emulgiert, die Kapselwandbildung vollzieht, indem man dieser Emulsion eine zweite kapselwandbildende Reaktionskomponente zuführt, wobei die Temperatur des Reaktionsgemisches zur Entfernung des Hilfslösungsmittels vor und/oder während der kkpselwandbildung oberhalb der Siedetemperatur des Hilfslösungsmittels liegt und die entstandenen Mikrokapseln aus der polaren Flüssigkeit isoliert.

2. Verfahren gemäß Anspruch 1, dadurch gekennzeichnet, daß die zweite kapselwandbildende Komponente in einer polaren Flüssigkeit gelöst zugegeben wird.

3. Verfahren gemäß Anspruch 2, dadurch gekennzeicnet, daß die polare Flüssigkeit einen Emulgator/Dispergator enthält.

4. Verfahren gemäß Ansprüchen 1, 2 und 3, dadurch gekennzeichnet, daß das Hilfslösungsmittel durch reduzierten Druck entfernt wird.

## Claims

1. Process for the preparation of microcapsules containing lipophilic materials by an interfacial surface polyaddition process, characterized in that lipophilic materials and a first capsule wall-forming reaction component are dissolved in an auxiliary solvent, this solution is emulsified in a polar liquid which is not miscible with it, optionally in the presence of an emulsifier/dispersant, the capsule wall formation is completed by adding a second capsule wall-forming reaction component to this emulsion, during which the temperature of the reaction mixture is above the boiling point of the auxiliary solvent in order to remove the auxiliary solvent before and/or during the capsule wall formation, and the resulting microcapsules are isolated from the polar liquid.

2. Process according to Claim 1, characterized in that the second capsule wall-forming component is added dissolved in a polar liquid.

3. Process according to Claim 2, characterized in that the polar liquid contains an emulsifier/dispersant.

4. Process according to Claims 1, 2 and 3, characterized in that the auxiliary solvent is removed by means of reduced pressure.

## Revendications

1. Procédé de production de microcapsules contenant des substances lipophiles par un procédé de polyaddition interfaciale, caractérisé en ce qu'on dissout des substances lipophiles et un premier composant réactif formant la paroi des capsules dans un solvant auxiliaire, on émulsionne cette solution dans un liquide polaire qui y est non miscible, le cas échéant en présence d'un agent émulsionnant/dispersant, on accomplit la formation de la paroi des capsules en apportant à cette émulsion un second composant réactif formant la paroi des capsules, la température du mélange réactionnel étant au-dessus de la température d'ébullition du solvant auxiliaire en vue de l'élimination de ce dernier avant et/ou pendant la formation de la paroi des capsules, et on isole du liquide polaire les microcapsules formées.

2. Procédé suivant la revendication 1, caractérisé en ce que le second composant formant la paroi des capsules est ajouté sous la forme dissoute dans un liquide polaire.

3. Procédé suivant la revendication 2, caractérisé en ce que le liquide polaire contient un agent émulsionnant/dispersant.

4. Procédé suivant les revendications 1, 2 et 3, caractérisé en ce que le solvant auxiliaire est éliminé sous pression réduite.